# EUROPÄISCHE PATENTSCHRIFT

(11) **EP 0 835 173 B1**
(45) Veröffentlichungstag und Bekanntmachung des Hinweises auf die Patenterteilung: **17.01.2001**
(21) Anmeldenummer: 96924809.5
(22) Anmeldetag: 28.06.1996
(51) Int. Cl.: B23Q 1/00, B23Q 11/10

(54) **WERKZEUGAUFNAHME FÜR KÜHL- BZW. SCHMIERMITTELVERSORGTE WERKZEUGE UND ZUGEORDNETER KÜHL- BZW. SCHMIERMITTELSPEICHER**
TOOL-HOLDING FIXTURE FOR TOOLS SUPPLIED WITH COOLANT OR LUBRICANT AND ASSOCIATED RESERVOIR FOR COOLANT OR LUBRICANT
PORTE-OUTIL POUR OUTILS ALIMENTES EN AGENT REFRIGERANT OU EN LUBRIFIANT ET RESERVOIR ASSOCIE POUR AGENT REFRIGERANT OU LUBRIFIANT

(30) Priorität: 30.06.1995 DE 19524004; 08.05.1996 DE 19618540
(43) Veröffentlichungstag der Anmeldung: 15.04.1998
(73) Patentinhaber: Gühring, Jörg, 72458 Albstadt (DE)
(72) Erfinder: Cselle, Tibor, 72488 Sigmaringen (DE)
(74) Vertreter: Winter, Brandl, Fürniss, Hübner, Röss, Kaiser, Polte Partnerschaft
(86) Internationale Anmeldenummer: EP9602838
(87) Internationale Veröffentlichungsnummer: WO9702109

(56) Entgegenhaltungen:
- DATABASE WPI Section PQ, Week 8804 Derwent Publications Ltd., London, GB; Class P54, AN 88-027320 XP002016350 & SU,A,1 316 757 (RIGA POLY) , 15.Juni 1987
- DATABASE WPI Section PQ, Week 8911 Derwent Publications Ltd., London, GB; Class P56, AN 89-083338 XP002016351 & SU,A,1 421 494 (LENGD MECH INST) , 7.September 1988
- PATENT ABSTRACTS OF JAPAN vol. 003, no. 140 (M-081), 20.November 1979 & JP,A,54 116797 (TOSHIBA MACH CO LTD), 11.September 1979,

## Beschreibung

Die Erfindung betrifft eine Werkzeugaufnahme für kühl- bzw. schmiermittelversorgte rotierende Werkzeuge gemäß dem Oberbegriff des Patentanspruchs 1 und ein Kühl- bzw. Schmierverfahren gemäß dem Verfahrensanspruch 22, wie z.B. Bohr-, Fräs-, Reib- oder Gewindeschneidwerkzeuge.

Die beim Zerspanen an der Schneide entstehende Wärme wird in vielen Fällen durch gezieltes Zuführen von Kühl- bzw. Schmiermittel abgeführt. Während man in der Vergangenheit separate, am Gehäuse der Werkzeugmaschine verlegte Schmiermittelleitungen eingesetzt hat, deren Austrittsdüse auf die Schneide gerichtet wurde, ist man in jüngerer Zeit immer mehr dazu übergegangen, das Kühl- bzw. Schmiermittel durch Innenkanäle im Werkzeug unmittelbar an die Werkzeugschneide zu führen. Hierdurch wird nicht nur Kühl- bzw. Schmiermittel eingespart, sondern es ergibt sich auch der weitere Vorteil, daß das Kühl- bzw. Schmiermittel mit erheblich höheren Drücken an die thermisch besonders hochbeanspruchten Stellen herangebracht werden kann.

Um im Hinblick auf die stetig steigenden Anforderungen bezüglich des Umweltschutzes die Kühl- bzw. Schmiermittelmenge weiter zu verringern, geht die Entwicklung moderner Werkzeuge dahin, das Kühl- bzw. Schmiermittel noch gezielter einzusetzen, indem beispielsweise die Austrittsöffnung von im Werkzeug liegenden Kühl- bzw. Schmiermittelkanälen in die unmittelbare Schneidennähe gelegt wird. Ferner wird versucht, neue Materialien im Bereich der Schneiden bzw. der Schneidenträger einzusetzen, die mit wesentlich geringeren Kühl- bzw. Schmiermittelmengen auskommen. Es sind in diesem Zusammenhang sogenannte Trocken- bzw. Pseudo-Trocken-Bearbeitungswerkzeuge konzipiert worden, die damit auch in Werkzeugmaschinen eingesetzt werden können, welche über keine gesonderte Schmier- bzw. Kühlmittelversorgung verfügen.

Die Trocken- bzw. Pseudo-Trocken-Bearbeitung nimmt in der Fertigungstechnik heutzutage einen immer größeren Raum ein. Allerdings läßt sich diese Form der Bearbeitung nicht für alle Werkzeuge und insbesondere nicht für alle Schnittbedingungen, d.h. Vorschubgeschwindigkeiten, Drehzahlen usw., realisieren. Da Werkzeugmaschinen jedoch regelmäßig mit einer Vielzahl von unterschiedlichsten Werkzeugen bestückt werden, ist eine Flexibilität auch hinsichtlich der Kühl- und Schmiermittelversorgung des Werkzeugs verlangt.

Die Druckschnitt DE-C-29794 offenbart eine Werkzeugaufnahme gemäß dem Oberbegriff des Patentanspruchs 1.

Aufgabe der Erfindung ist es, eine Werkzeugaufnahme für rotierende Werkzeuge gemäß dem Oberbegriff des Patentanspruchs 1 derart zu verbessern, daß ein großes Spektrum an Werkzeugen, die einen unterschiedlichen Kühl- bzw. Schmiermittelbedarf haben, selbst in Werkzeugmaschinen eingesetzt werden kann, die für eine reine Trockenbearbeitung ausgelegt sind.

Diese Aufgabe wird durch die Werkzeugaufnahme gemäß Patentanspruch 1 gelöst.

Erfindungsgemäß wird eine vorzugsweise als Werkzeugsystem-Modul zu handhabende Werkzeugaufnahme geschaffen, die hinsichtlich der Kühl- bzw. Schmiermittelversorgung für das einzuspannende bzw. aufzunehmende Werkzeug autark ist. Mit anderen Worten, die erfindungsgemäße Werkzeugaufnahme dient als Ersatz für das bislang in bekannten Maschinen erforderliche und verhältnismäßig komplexe Leitungssystem für die Zufuhr von Kühl- bzw. Schmiermittel. Damit gelingt es, auf Werkzeugmaschinen ohne Kühl- bzw. Schmiermittelzufuhr, Werkzeuge einzusetzen, die je nach Einsatzbedingungen wie Drehzahl bzw. Schnittgeschwindigkeit mit oder ohne Kühlmittelzufuhr betrieben werden müssen, um optimale Zerspanungsergebnisse zu erzielen. Die erfindungsgemäße Werkzeugaufnahme erhöht deshalb die Flexibilität der zerspanenden Fertigung erheblich, wobei sie sich sehr leicht in bestehende Werkzeugsysteme integrieren läßt. Durch die Auffüllbarkeit des Kühl- bzw. Schmiermittelspeichers kann das von der Werkzeugaufnahme in Anspruch genommene Bauvolumen verkleinert werden, was die Möglichkeit eröffnet, die Werkzeugaufnahme selbst mit extrem hohen Drehzahlen von beispielsweise bis zu 30.000 min⁻¹ zu betreiben. Die erfindungsgemäße Dosiereinrichtung erlaubt eine sehr ökonomische Verwendung von Kühl- bzw. Schmiermittel, was dem Umweltschutz zugute kommt. So ist es erfindungsgemäß beispielsweise möglich, die Dosiereinrichtung so anzusteuern, daß Schmier- bzw. Kühlmittel nur dann in gezielt dosierter Weise an die höchstbeanspruchten Bereiche der Schneiden gelangt, wenn dies zum Schutz der Schneide bzw. zur Erzielung der erwünschten Oberflächenbeschaffenheit unbedingt erforderlich ist.

Eine hinsichtlich des Aufbaus und der Funktion der Werkzeugaufnahme vorteilhafte weitere Ausgestaltung ergibt sich mit Patentanspruch 2. Hier wird neben dem bereits in die Werkzeugaufnahme integrierten Kühl- bzw. Schmiermittelspeicher die Dosiereinrichtung in die Werkzeugaufnahme integriert.

Gemäß dem Unteranspruch 3 weist die Dosiereinrichtung eine Fördereinrichtung auf, wodurch die Möglichkeit eröffnet wird, das Kühl- bzw. Schmiermittel noch gezielter und genauer einzusetzen, um dadurch mit minimalen Kühl- bzw. Schmiermittelmengen auszukommen (Mindermengenschmierung).

Die Kühl- bzw. Schmiermittlel-Fördereinrichtung gemäß Anspruch 4 hat den besonderen Vorteil, daß das Kühl- bzw. Schmiermittel mit geringem Aufwand drehzahlabhängig und fein abgestimmt dosiert werden kann, wodurch sich eine gute Umweltverträglichkeit ergibt.

Diese Fördereinrichtung saugt aus der Umgebung Luft an, was den Vorteil mit sich bringt, keine weitere Energie- bzw. Druckquelle zu benötigen. Es hat sich gezeigt, daß sich mit einer Ausführung der Fördereinrichtung in Form einer Pumpe, vorteilhafterweise einer Flügelzellenpumpe, gemäß Unteranspruch 5 der oben erwähnte Vorteil erreicht werden kann.

Gemäß Unteranspruch 6 wird der über die Fördereinrichtung angesaugte Luftstrom über eine an das Kanalsystem angeschlossene Mischkammer geleitet, wodurch das Kühl- bzw. Schmiermittel mitgerissen wird und als Luft-Kühl- bzw. Schmiermittelgemisch der Werkzeugschneide zuführbar ist. Dieses Luft-Kühl- bzw. Schmiermittelgemisch trägt dazu bei, mit minimalen Kühl- bzw. Schmiermittelmengen auszukommen, und gleichzeitig einen wesentlich besseren Schmiereffekt für das Werkzeug zu bewirken, als mit der reinen Medim-Schmierung.

Mit Unteranspruch 7 wird der Aufbau einer derartigen Mischkammer vorgestellt, die den Kühl- bzw. Schmiermittelspeicher über ein Kanalsystem in der Werkzeugaufnahme und ein im Kanalsystem angeordnetes Dosierventil für die Kühl- bzw. Schmiermittelzuführung mit der Einspannstelle des Werkzeugs verbindet.

Der Kühl- bzw. Schmiermittelspeicher ist grundsätzlich in beliebiger Formgebung gestaltbar. Mit der Ausbildung gemäß dem Patentanspruch 8, d.h. durch die zylindrische Ausbildung des Speichervolumens wird jedoch die Voraussetzung für eine rotationssymmetrische Gestaltung geschaffen, die den Vorzug einer sehr einfachen Auswuchtbarkeit hat. Damit eignet sich die Werkzeugaufnahme in besonderem Maße für Werkzeuge, die drehend angetrieben sind.

Die Weiterbildung in Anspruch 9 hat den Vorteil, daß die den Kraftspeicher bereitstellende Feder sehr platzsparend untergebracht werden kann. Dadurch kann die Speicherfeder mit einer verhältnismäßig flachen Federkennlinie ausgebildet werden, mit dem Erfolg, daß der Speicherdruck weitgehend unabhängig vom Füllvolumen auf einem konstanten Druckniveau gehalten werden kann.

Eine weitere bauliche Verbesserung läßt sich mit der Weiterbildung des Patentanspruchs 10 erzielen. Vorteilhafterweise wird die Dosiereinrichtung von einer Dosierventileinrichtung gebildet. Bezüglich der Gestaltung der Dosierventileinrichtung sind viele Möglichkeiten gegeben. Dosierventile lassen sich mit gewünschter Charakteristik auf engstem Raum unterbringen, in dem beispielsweise einstellbare Rückstellfedern für die entsprechenden Ventilkörper bzw. andere Einstellmöglichkeiten für verstellbare Drosseln zur Anwendung kommen. Es ist auch möglich, zusätzliche hydraulische Bauelemente einzusetzen, mit denen der Druckabfall an der Drossel viskositäts- bzw. temperaturgesteuert kontrolliert werden kann.

Es hat sich gezeigt, daß eine Dosierventileinrichtung mit einfachen Maßnahmen in Abhängigkeit von den Einsatzbedingungen des Werkzeugs bzw. von den Schnittbedingungen an der Schneide angesteuert werden kann. Vorteilhafterweise wird die Stellkraft für die Dosierventileinrichtung von der Fliehkraft bestimmt. In diesem Fall wird vorteilhafterweise die Öffnungscharakteristik der Drossel an die nicht-lineare Veränderung der Stellkraft so angepaßt, daß eine ausreichende Versorgung der Schneide mit Schmier- bzw. Kühlmittel sichergestellt ist. Es ist in diesem Zusammenhang von zusätzlichem Vorteil, die Dosierventileinrichtung mit einer Art Stromregelfunktion derart auszustatten, daß das über die Dosierventileinrichtung fließende Kühl- bzw. Schmiermittel tatsächlich in der dem betreffenden Einsatzfall des Werkzeugs optimal angepaßten Menge an die Schneide geleitet werden kann.

Weitere vorteilhafte Ausgestaltungen der Erfindung sind Gegenstand der übrigen Unteransprüche.

Schließlich besteht die Aufgabe der Erfindung im Hinblick auf die zukünftigen, stetig steigenden Anforderung im Bereich der Umweltverträglichkeit darin, ein besonders ökologisches und wirtschaftliches Verfahren zur Kühlung bzw. Schmierung von Werkzeugen vorzusehen. Die Lösung dieser Aufgabe ist Inhalt der Verfahrensansprüche 22 bis 25.

Nachstehend werden anhand schematischer Zeichnungen mehrere Ausführungsbeispiele der Erfindung näher erläutert. Es zeigen:
Fig. 1 eine schematische, teilweise im Schnitt und aufgebrochen gezeigte Seitenansicht einer als Werkzeugsystem-Modul ausgebildeten Werkzeugaufnahme in einer ersten Ausgestaltung;
Fig. 2 eine der Figur 1 ähnliche Ansicht einer weiteren Ausführungsform der Werkzeugaufnahme;
Fig. 3 eine der Figur 2 ähnliche Ansicht (teilweise im Schnitt) einer dritten Ausführungsform der Werkzeugaufnahme in Form eines Werkzeugsystem-Moduls zur Erläuterung einer beispielhaften Ausgestaltung des Kühl- bzw. Schmiermittelspeichers; und
Fig. 4 einen Querschnitt einer weiteren Ausführungsform der Erfindung mit einer von einer äußeren Energiequelle unabhängig arbeitenden Fördereinrichtung für Kühl- bzw Schmiermittel.

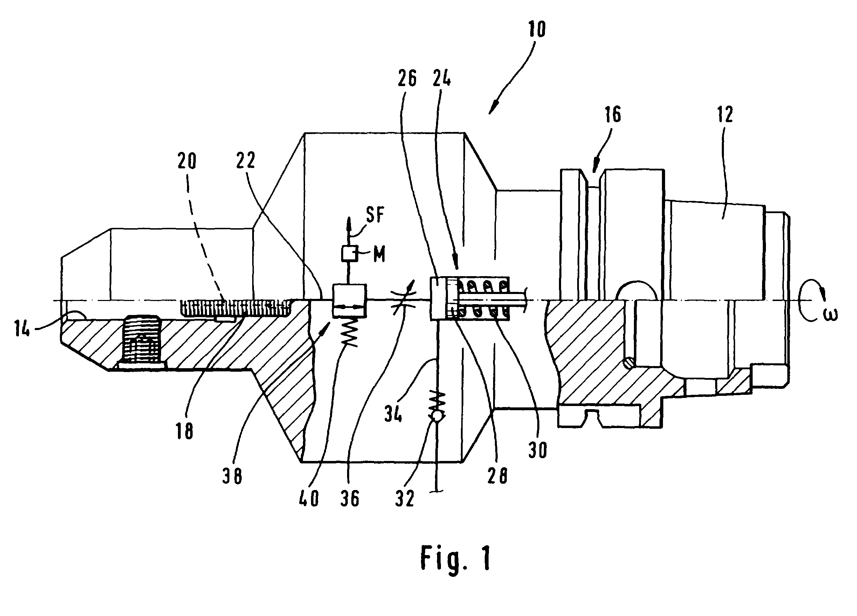

In Figur 1 ist mit dem Bezugszeichen 10 eine als Werkzeugsystem-Modul ausgebildete Werkzeugaufnahme bezeichnet, die auf der einen Seite (in Figur 1 rechte Seite) einen Hohlschaftkegel 12 zur Ankopplung an eine entsprechende Aufnahme eines weiteren Werkzeugsystem-Moduls oder eine Maschinenspindel und auf der anderen Seite (in Figur 1 linken Seite) eine zylindrische Aufnahme 14 für die Aufnahme eines nicht näher gezeigten Werkzeugs aufweist. Mit 16 ist eine Greiferrille angedeutet, so daß sich der in Figur 1 gezeigte Modul sowohl für den manuellen als auch für den automatischen Werkzeugwechsel eignet.

Die Besonderheit der in Figur 1 gezeigten modularen Werkzeugaufnahme besteht darin, daß sie eine autarke Einheit zur dosierten Schmier- bzw. Kühlmittelversorgung des in die Aufnahme 14 eingesetzten Werkzeugs bildet. Zu diesem Zweck nimmt die zylindrische Aufnahme 14 einen Kühl- bzw. Schmiermittelzulauf-Einsatz 18 auf, der eine zentrale Bohrung 20 für das zum Werkzeug zu führende Schmier-bzw. Kühlmittel hat. Die zentrale Bohrung 20 steht in Strömungsmittelverbindung zu einer schematisch angedeuteten Kühl- bzw. Schmiermittelleitung 22 in der Aufnahme 10.

In die Werkzeugaufnahme ist ein schematisch dargestellter Kühl- bzw. Schmiermittelspeicher 24 integriert, der von einer Kolben-/Zylinderanordnung gebildet ist, so daß auf der Kühl-/Schmiermittelleitung zugewandten Seite ein mit Kühl- bzw. Schmiermittel gefülltes Volumen einerseits vom Gehäuse des Speichers 24 und andererseits vom Kolben 28 eingefaßt ist. Das Volumen 26 ist vorzugsweise mit einer ökologisch unbedenklichen Schmiermittelflüssigkeit gefüllt, wie z.B. Bioflüssigkeit.

Mit dem Bezugszeichen 30 ist eine Feder angedeutet, die den Kolben 28 vorspannt, so daß das Volumen 26 unter einem vorbestimmten Druck steht.

Über eine Zulaufleitung 34 ist das Volumen 26 mit Kühl- bzw. Schmiermittel füllbar, und zwar über ein Rückschlagventil 32, das verhindert, daß der Druck im Volumen 26 nach außen abgebaut wird.

Das Volumen 26 ist andererseits an die Kühl-/Schmiermittelleitung 22 angeschlossen, und zwar über eine einstellbare Drossel bzw. ein Drosselventil 36 und eine dazu in Reihe geschaltete Blende 38 mit veränderbarem Durchtrittsquerschnitt. Dies ist durch das Ventilsymbol in Figur 1 angedeutet, wobei der Ventilkörper als Quadrat symbolisiert ist, und der Doppelpfeil den Durchtritt durch die Blende bezeichnet. Der Ventilkörper wird durch eine Vorspannkraft - angedeutet durch die Feder 40 - so vor-gespannt, daß die Blende, d.h. der Durchtritt von Kühl- bzw. Schmiermittel zur Leitung 22 gesperrt wird. In Öffnungsrichtung, d.h. in Richtung entgegen der Kraft der Feder 40 wirkt eine Stellkraft SF, die erfindungsgemäß mit dem Betriebszustand des Werkzeugs, d.h. mit dem damit einhergehenden, sich verändernden Kühl- bzw. Schmiermittelbedarf der Schneide variiert. Bei dem gezeigten Ausführungsbeispiel ist die Stellkraft fliehkraftgesteuert, d.h. am Ventilkörper greift eine Masse M an, der sich mit der Drehgeschwindigkeit Ω des Werkzeugs und damit der Werkzeugaufnahme verändernde Zentrifugalkraft die Blende 38 verstellt.

Die vorstehende Beschreibung zeigt, daß die Werkzeugaufnahme im Betrieb des Werkzeugs von einer externen Kühl- bzw. Schmiermittelquelle abgekoppelt ist, wobei gleichwohl im Betrieb des Werkzeugs eine Versorgung des in die Aufnahme 14 eingesetzten Werkzeugs mit einer ausreichenden Kühl- bzw. Schmiermittelmenge erfolgt. Durch geeignete Einstellung des Speicherdrucks beispielsweise über die Vorspannung der Feder 30, der veränderbaren Drossel 40 und der Öffnungscharakteristik der Blende 38 kann die Versorgung der Schneide mit Schmiermittel an die jeweilige Bearbeitungsaufgabe im Hinblick darauf angepaßt werden, daß ein Minimum an Kühl- bzw. Schmiermittel verbraucht wird. Das Schmiermittel wird dabei vorzugsweise von der Spannstelle stromab der Leitung 22 über innenliegende Kühlmittelkanäle an die Werkzeugschneide geleitet.

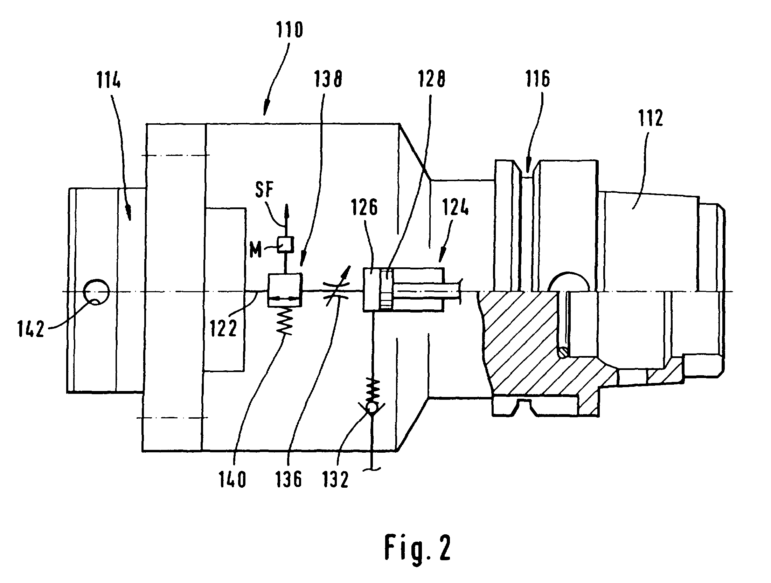

Die erfindungsgemäße Ausstattung der Werkzeugaufnahme ist nicht auf ein bestimmtes Spannsystem des Werkzeugsystem-Moduls und/oder des Werkzeugs beschränkt. Dies soll anhand der Figur 2 näher erläutert werden:

Die Ausführungsform gemäß Figur 2 entspricht weitestgehend derjenigen gemäß Figur 1. Entsprechende bzw. vergleichbare Komponenten sind deshalb mit ähnlichen Bezugszeichen bezeichnet, denen lediglich eine "1" vorangestellt ist. Abweichungen von der Ausgestaltung nach Figur 1 ergeben sich lediglich im Bereich der Werkzeugaufnahme auf der gemäß Figur 2 linken Seite des Moduls. Die Werkzeugaufnahme 114 ist hier von einem schematisch dargestellten Aufnahmeflansch gebildet, in dem beispielsweise ein Hohlschaftkegelwerkzeug aufgenommen werden kann. Mit dem Bezugszeichen 142 ist eine radiale Durchtrittsöffnung angedeutet, die mit einer entsprechenden Durchtrittsöffnung im Hohlspannkegel des nicht näher dargestellten Werkzeugs in Fluchtung gebracht werden kann, damit entsprechende Stellkörper des zugehörigen Spannsystems zur Anklammerung des Werkzeugs an die Aufnahme 110 bestätigt werden können.

Mit der Ausführungsform gemäß Figur 2 - in Form eines Zwischenmoduls - wird pro Spindel nur ein einziger einen Kühl- bzw. Schmiermittelspeicher aufweisender Modul benötigt, an dem Werkzeugaufnahmen beliebiger Gestalt angekoppelt werden können.

Im übrigen entspricht die Ausgestaltung gemäß Figur 2 insbesondere hinsichtlich des Kühl- bzw. Schmiermittelspeichers und dessen Versorgung bzw. dosierte Entleerung vollständig der Ausführungsform gemäß Figur 1, so daß eine nähere Beschreibung funktionsweise hier entfallen kann. Abweichend von der Ausgestaltung nach Figur 1 ist die Feder 30 nicht gezeigt, was andeuten soll, daß die Vorspannung des Speichervolumens 126 auch auf andere geeignete Weise erfolgen kann.

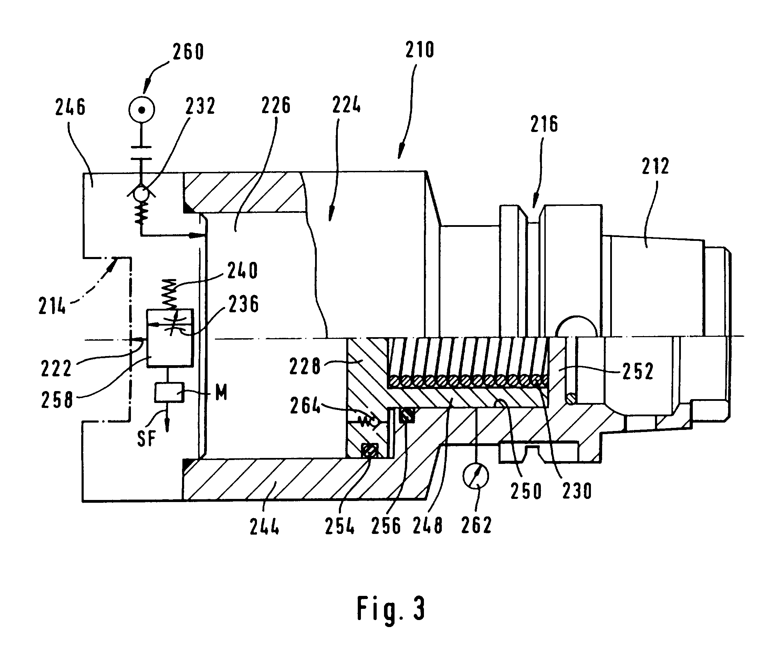

Desweiteren wird anhand der Figur 3 eine Detailbeschreibung einer weiteren möglichen Ausgestaltung der erfindungsgemäßen Werkzeugaufnahme beschrieben, die auf der gemäß Figur 3 linken Seite mit einer stark schematisierten Werkzeugaufnahme ausgestattet ist. Zur Vereinfachung der Beschreibung sind in Figur 3 wiederum diejenigen Bauteile und Komponenten, die den Elementen der vorstehend beschriebenen Ausführungsformen ähnlich sind bzw. diesen entsprechen, mit ähnlichen Bezugszeichen bezeichnet, denen eine "2" vorangestellt ist.

Man erkennt, daß die Aufnahme 214 für das nicht gezeigte Werkzeug stark schematisiert dargestellt ist, was durch die strichpunktierten Linien noch unterstrichen wird.

Auf der gemäß Figur 3 rechten Seite ist wiederum am Werkzeugaufnahme-Modul ein Hohlschaftkegel 212 zur Ankopplung an den benachbarten Werkzeugsystem-Modul bzw. an die Maschinenspindel angeordnet.

Figur 3 zeigt Einzelheiten der Ausgestaltung des in die Werkzeugaufnahme integrierten Kühl- bzw. Schmiermittelspeichers 226. Das rotationssymmetrische Gehäuse der Werkzeugaufnahme 210 ist zwischen den beidseitigen Anschlußstellen radial nach außen erweitert, so daß im inneren ein zylindrisches Speichervolumen 226 beispielsweise mit einer Größe von etwa 100 bis 300 cm³ ausgebildet wird. Das kreiszylindrische Gehäuse 244 ist auf Seiten der Werkzeugaufnahme 214 durch eine Scheibe 246 verschlossen. Auf der der Scheibe 246 angewandten Seite ist das Innenvolumen 226 vom Kolben 228 begrenzt, der auf der dem Werkzeug abgewandten Seite einen Führungskragen 248 ausbildet, für den in der Werkzeugaufnahme 210 eine Führungsausnehmung 250 vorgesehen ist.

Im Führungskragen 248 ist die Speicherfeder 230 aufgenommen, die sich an einer Wand 252, die den Boden des Hohlschaftkegels 212 bildet, abstützt. Die Bezugszeichen 254, 256 bezeichnen Dichtungen.

Man erkennt aus der Darstellung, daß die Werkzeugaufnahme gemäß Figur 3 rotationssymmetrisch aufgebaut ist, wodurch sich gute Voraussetzungen für ein hochgenaue Auswuchtung der Werkzeugaufnahme bzw. des Moduls ergeben. Dadurch, daß die Speicherfeder 230 weitgehend im inneren des Führungskragens 248 des Kolbens 228 aufgenommen ist, wird wenig Bauraum verschenkt, obwohl die Speicherfeder 230 sehr lang und damit mit einer sehr flachen Federkennlinie ausgestattet werden kann. Dadurch ergibt sich der Vorteil, daß die Speicherfeder 230 während des gesamten Hub des Kolbens 228, d.h. mit zunehmender Entleerung des Speichervolumens 226 einen nahezu konstanten Innendruck von beispielsweise 3 bis 5 bar aufrechterhalten kann.

Mit 258 ist eine etwas modifizierte Dosierventileinrichtung bezeichnet, bei der die einstellbare Drossel in das Drosselventil integriert ist. Im übrigen ist nach wie vor eine Rückstellfeder 240 vorgesehen und eine der Kraft dieser Rückstellfeder 240 entgegenwirkende fliehkraftabhängige Stellkraft, die von der Masse M induziert wird. Wie der Figur 3 ferner entnehmbar ist, ist die Dosierventileinrichtung 240 in die das Gehäuse 244 abschließende Scheibe 246 integriert, ebenso wie das Lade-Rückschlagventil 232, das zum Auffüllen des Speichers an eine mit 260 bezeichnete externe Druckmittelquelle anschließbar ist.

Schließlich ist mit dem Bezugszeichen 262 noch eine Füllstandanzeige angedeutet, mit der - beispielsweise indirekt - über die Stellung des Kolbenkragens 248 der momentane Füllstand des Speichervolumens 226 abgetastet werden kann. Mit 264 ist ein weiteres Rückschlagventil bezeichnet, das beim Füllvorgang des Speichervolumens 226 dafür sorgt, daß sich auf der Rückseite des Kolbens 228 kein Überdruck aufbaut.

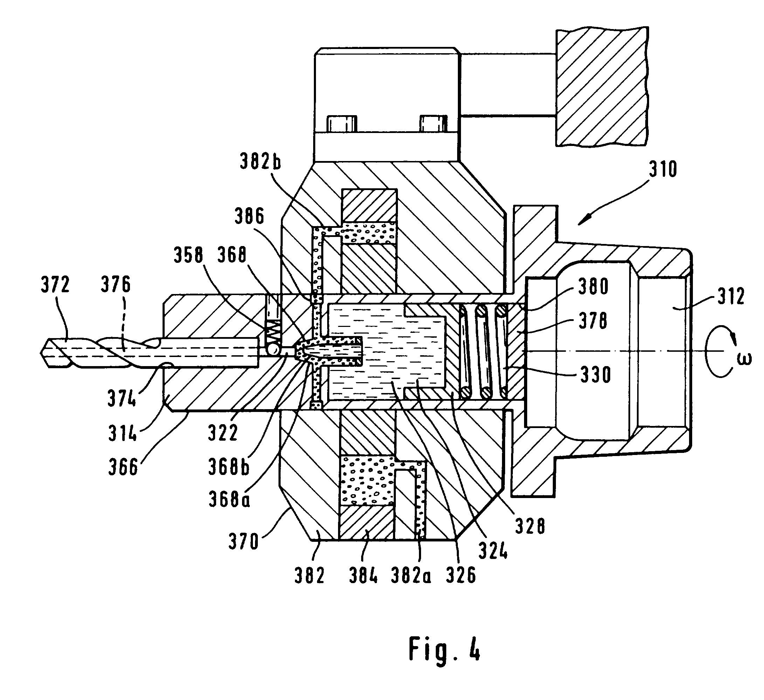

In Fig. 4 ist eine Werkzeugaufnahme dargestellt, die sich in ihrem Aufbau und ihrem Funktionieren von den vorstehend dargestellten Werkzeugaufnahmen etwas unterscheidet. Der Gedanke der Kühlung und Schmierung eines Werkzeugs durch Kühl- bzw. Schmiermittel aus einem in die Werkzeugaufnahme integrierten Speicher ist nach wie vor derselbe, jedoch stellt diese erfindungsgemäße Ausführungsform eine weitere Verbesserung hinichtlich der Minimalschmierung dar. Entsprechende bzw. vergleichbare Komponenten sind wiederum mit ähnlichen Bezugszeichen bezeichnet, denen in Fig. 4 eine "3" vorangestellt ist. Auf die nähere Beschreibung der Funktionsweise oder des Aufbaus der von den vorhergehenden Ausführungsformen bekannten Komponenten wird hier verzichtet.

Die mit Bezugszeichen 310 bezeichnete Werkzeugaufnahme weist einen Werkzeugaufnahmeschaft 366, eine Dosiereinrichtung 358, 368 und 370 und auf der rechten Seite gemäß Fig. 4 einen Hohlschaftkegel 312 auf. Die Dosiereinrichtung wiederum umfaßt ein Dosierventil 358, eine Mischkammer 368 und ein Fördersystem bzw. eine Fördereinrichtung 370.

Wie auch bei den vorhergehenden Ausführungsformen ist die Werkzeugaufnahme 310 als ein Werkzeugsystem-Modul ausgebildet und somit an einen weiteren Werkzeugsystem-Modul, beispielsweise an eine Bohr- oder Frässpindel ankoppelbar.

Der rechte Bereich des Werkzeugaufnahmeschafts 366 ist, ähnlich wie die vorhergehenden Ausführungsformen, als ein Hohlschaftkegel 312 zur Ankopplung an einen weiteren Werkzeugsystem-Modul ausgebildet. Der linke Bereich ist als ein zylindrischer Aufnahmeabschnitt 314 zur Aufnahme eines Werkzeugs 372, insbesondere eines Zerspanungswerkzeugs, wie z. B. eines Bohrers, ausgebildet. Dieser Aufnahmeabschnitt 314 weist eine Aufnahmebohrung 374 auf, in die das Werkzeug 372 eingesetzt ist, das auf eine hier nicht näher beschriebene geeignete Art und Weise befestigt bzw. eingespannt wird, z. B. durch eine Klemmschraube. Mit dem Bezugszeichen 376 ist ein interner Schmierkanal bzw. ein innenliegendes Kanalsystem im Werkzeug 372 bezeichnet, der bzw. das in Schneidennähe mündet. Das Kühl- bzw. Schmiermittel wird, wie später beschrieben, über das in der zylindrischen Aufnahme 314 ausgebildete Kanalsystem 322 und das im Werkzeug ausgebildete Kanalsystem 376 an die Werkzeugspitze, d. h. an den Werkzeugschneidenbereich, geführt.

Der Bereich des Werkzeugaufnahmeschafts 366 zwischen der zylindrischen Aufnahme 314 und dem Hohlschaftkegel 312 ist als eine Hohlwelle oder ein Hohlschaft ausgebildet. Der rotationssymmetrische Innenraum des Hohlschafts dient als der Kühl- bzw. Schmiermittelspeicher 324, der an der dem Werkzeug 372 abgewandten, rechten Seite mit einem als Boden des Hohlschaftkegels 312 fungierenden Verschluß 378 fluiddicht verschloßen ist. Dieser als eine Scheibe ausgebildete Verschluß 378 steht auf geeignete Weise mit der inneren Umfangswand 380 des Hohlschafts, beispielsweise über eine Gewinde-Schraubverbindung, so in Eingriff, daß das Kühl- bzw. Schmiermittel zum einen dicht eingeschlossen ist, und zum anderen keine Behinderung eines an den Hohlschaftkegel 312 angekoppelten Werkzeugsystem-Moduls erfolgt, wie es in Fig. 4 zu sehen ist.

Das Volumen 326 des Kühl- bzw. Schmiermittelspeichers 324 wird einerseits durch die Innenwände des Hohlschafts und andererseits durch einen federbeaufschagten Kolben 328 eingegrenzt. Der Kühl-bzw. Schmiermittelspeicher 324 ist über den oben erwähnten Verschluß 378 befüllbar, z. B. durch ein in diesem Verschluß 378 angeordnetes Füllventil oder indem der Verschluß 378 ausgeschraubt und nach der Schmiermittelzugabe wieder eingeschraubt wird.

Der den Speicher 324 begrenzende Kolben 328 ist über eine Feder 330 an diesem Verschluß 378 abgestützt. Der federbeaufschlagte Kolben 328 übt auf das im Kühl-bzw. Schmiermittelspeicher 324 gespeicherte Kühl- bzw. Schmiermittel einen Druck in Richtung zum Werkzeug 372 hin aus. Die Aufgabe des Feder- und Kolben-Aufbaus 238 und 330 ist es, das Kühl- bzw. Schmiermittel im Kühl-bzw. Schmiermittelvolumen 326 des Speichers 324 auch bei der Kühl- bzw. Schmiermittelabgabe mit Druck zu beaufschlagen. Auf diese Weise wird ein Zustand vermieden, in dem bei Rotation der Werkzeugaufnahme die angesaugte Luft in den Kühl- bzw. Schmiermittelspeicher strömt, was beispielsweise bei einem Speicher mit konstanten Volumen der Fall wäre. Die Federkonstante der Feder 330 ist vorzugsweise derart gewählt, daß das Kühl- bzw. Schmiermittelvolumen zwar unter Druck gesetzt, aber nicht in eine später beschriebene Mischkammer 368 gedrückt wird.

Das Kühl- bzw. Schmiermittel wird bei Rotation der Werkzeugaufnahme über eine mit dem Kühl- bzw. Schmiermittelspeicher 324 in Verbindung stehende Mischkammer 368 und ein in einem Zuführkanal 322 eingebautes Dosierventil 358 an die Einspannstelle des Werkzeugs 372 geleitet und damit dem Werkzeug 372 zugeführt.

Die Mischkammer 368 ist in der zylindrischen Aufnahme 314 so angebracht, daß es sich auf Höhe der Rotationsachse der Werkzeugaufnahme 310 befindet und sich teilweise in die zylindrische Aufnahme 314 des Werkzeugaufnahmeschafts 366, wie auch teilweise in den Kühl- bzw. Schmiermittelspeicher 324 hinein erstreckt. Somit steht der Kühl- bzw. Schmiermittelspeicher über die Mischkammer 368 mit dem Zuführkanal 322 der zylindrischen Aufnahme 314 in Verbindung.

Die Strömungsrichtung des Kühl- bzw. Schmiermittels verläuft dabei bei offenem Dosierventil 358 von rechts nach links in Richtung zum Werkzeug, d. h. aus dem Kühl- bzw. Schmiermittelspeicher 324, durch die Mischkammer 368, in den Zuführkanal 322 und über das Dosierventil 358 zur Einspannstelle des Werkzeugs. Das Dosierventil 358 ist beispielsweise als Drosselventil wie auch schon bei den vorhergehenden Ausführungsformen ausgebildet. Auf eine ausführlichere Beschreibung kann daher verzichtet werden. Die Mischkammer 368 wird nachstehend ausführlicher beschrieben.

Bezugszeichen 370 kennzeichnet eine Fördereinrichtung, die im wesentlichen aus zwei Teilen hat: ein Pumpengehäuse 382 und ein Pumpenrad 384.

Das Pumpengehäuse 382 ist bezüglich der Werkzeugaufnahme 310 auf geeignete Weise drehfest an einen nicht näher beschriebenen Spindelstock koppelbar und bezüglich des Werkzeugaufnahmeschafts 366 drehbar aufgenommen. Das Pumpenrad 384 ist im Pumpengehäuse 382 drehbar gelagert und mit dem Werkzeugaufnahmeschaft 366 drehfest fest verbunden.

Im Pumpengehäuse 382 sind Kanäle 382a und 382b ausgebildet, über die bei Rotation der Werkzeugaufnahme 310 aus der Umgebung der Werkzeugaufnahme 310 Luft angesaugt und weitergeleitet wird. 382a bezeichnet einen Saugkanal, der mit der Außenumgebung der Werkzeugaufnahme 310 in Verbindung steht und über den die Luft aus der Umgebung angesaugt wird. 382b ist ein Druckkanal über den die bei Rotation angesaugte Luft an eine im Werkzeugaufnahmeschaft ausgebildete Ringnut 386 geführt wird. Die Ringnut 386 steht über eine oder mehrere Bohrungen mit der Mischkammer 368 in Verbindung, wodurch der Luftstrom in diesem Ausführungsbeispiel radial in die Mischkammer eingeleitet wird.

Das Pumpenrad 384 kann wie ein Flügelzellenrad einer Flügelzellenpumpe ausgebildet sein. Pumpenrad 384 und Pumpengehäuse 382 bilden gemeinsam die Fördereinrichtung, in der Form z. B. einer Flügelzellenpumpe, die während der Rotation der Werkzeugaufnahme aus der Umgebung Luft ansaugt, auf ca. 2 bar verdichtet und diese der Mischkammer zuführt. Hinsichtlich der Funktion und des konkreten Aufbaus einer Flügelzellenpumpe sei auf die Fachliteratur verwiesen.

Die Mischkammer 368 ist als eine Doppelringdüse mit einem inneren Ring 368b und einem äußeren Ring 368a ausgebildet, und weist eine zum Werkzeug hin orientierte Strömungsrichtung auf. Mittels der Fördereinrichtung 370 wird die aus der Umgebung angesaugte und verdichtete Luft in den äußeren Ring 368a in radialer Richtung eingeleitet. Wenn während der Rotation das Dosierventil 358 den Zuführkanal 322 zwischen der Mischkammer 368 und dem Werkzeug 372 öffnet, dann strömt die unter Druck stehende Luft an die Einspannstelle des Werkzeugs, wobei über den inneren Ring 368b das Kühl- bzw. Schmiermittel in den Raum zwischen dem inneren 368b und äußeren 368a Ring der Mischkammer 368 geleitet und durch den Luftstrom mitgerissen wird. Somit wird bei diesem Vorgang ein aus Luft und Kühl- bzw. Schmiermittel bestehendes Gemisch gebildet, das dem Werkzeug, der Rotation der Werkzeugaufnahme entsprechend, zugeführt wird. Hierbei ist anzumerken, daß die Dosierung des Gemisches einerseits über die durch Rotation betätigte Fördereinrichtung 370 und andererseits über die Dosierventileinrichtung 358 erfolgt. In Abhängigkeit von der Rotationsgeschwindigkeit der Werkzeugaufnahme 310 wird somit ein Gemisch, bestehend aus Kühl- bzw. Schmiermittel und Luft, dosiert dem Werkzeug zugeführt.

Das Dosierventil 358 kann, wie oben schon erwähnt, ähnlich ausgeführt sein wie bei den vorhergehenden Ausführungsbeispielen, und wird daher nicht näher beschrieben. Das Dosierventil kann jedoch bei dieser Ausführungsform auch entfallen, da die Dosierung des an das Werkzeug abgegebenen Kühl- bzw. Schmiermittels bereits über die Fördereinrichtung erfolgt.

Im Betrieb der an ein weiteres Werkzeugsystem-Modul gekoppelten Werkzeugaufnahme 310 wird somit durch das sich mit der Werkzeugaufnahme drehende Pumpenrad 384 der Fördereinrichtung 370 über das Pumpengehäuse 382 aus der Umgebung Luft angesaugt, über den Saugkanal 382a, das Pumpenrad 384 und den Druckkanal 382b in Richtung zur Mischkammer 368 geleitet und radial in diese Mischkammer eingeführt. Während dieses Vorgangs wird die angesaugte Luft auf einen Druck von ca. 2 bar verdichtet. Dieser Druck reicht aus, um das Kühl- bzw. Schmiermitel durch im inneren Ring 368b ausgebildete Durchbrüche bzw. Öffnungen hindurch in den Raum zwischen dem inneren 368b und äußeren Ring 368a der Mischkammer zu ziehen bzw. zu reißen. Gleichzeitig wird bei Rotation der Werkzeugaufnahme der Rotation entsprechend das fliehkraftbetätigte Dosierventil wie schon bei vorhergehenden Ausführungsformen bekannt geöffnet. Dadurch kann das Gemisch, das aus der unter Druck stehenden Luft und dem aus dem Speicher 324 durch den Luftstrom mitgerissenen Kühl- bzw. Schmiermittel besteht, im Zuführkanal 322 über das in Abhängigkeit von der Rotationsgeschwindigkeit der Werkzeugaufnahme 310 geöffnete Dosierventil 358 dem innenliegenden Kanalsystem 376 des Werkzeugs 372 zugeführt werden. Der mengenmäßige Anteil von Kühl- bzw. Schmiermittel, der pro Stunde Betrieb mitgerissen wird, im Verhältnis zur angesaugten Luftmenge beträgt dabei ca. 10ml/h Kühl-bzw. Schmiermittel auf 3m³/hLuft.

Die Vorteile dieser Ausführung der Werkzeugaufnahme gegenüber dem bisher bekannten Stand der Technik sind daher:
- das Luft-Kühl- bzw. Schmiermittelgemisch erreicht einen wesentlich besseren Schmiereffekt für das Werkzeug, als die reine Kühl- bzw. Schmiermittelschmierung.
- durch Ansaugen von Luft aus der Umgebung ist keine zusätzliche Energie notwendig. Die Werkzeugaufnahme kann daher autark ohne teures Luftnetz arbeiten.
- es wird eine Schmierung mit minimaler Kühl- bzw. Schmiermittelmenge im Gemisch erreicht, was besonders hinsichtlich der Umweltfreundlichkeit wichtig ist.
- durch diese Minimalschmierung kann ebenfalls wirtschaftlicher gearbeitet gearbeitet werden.
- mit einem derartigen Gemisch aus Luft und Kühl-bzw. Schmiermittel wird zudem eine bessere Verteilung erreicht, als mit einem reinem Schmiermittel

Die Erfindung wurde vorstehend anhand einer Werkzeugaufnahme für drehende Werkzeuge, wie z.B. für Bohr-, Fräs-, Senk- oder Gewindeschneidwerkzeuge beschrieben. Es soll jedoch hier hervorgehoben werden, daß der tragende Gedanke der Erfindung die Schaffung eines autarken Kühl- bzw. Schmiermittelspeichers ist, der an beliebige Werkzeugsysteme bei Bedarf ankoppelbar ist und im Zusammenwirken mit einer entsprechenden Dosiereinrichtung dafür sorgt, daß das Werkzeug autark, d.h. losgelöst von externen bzw. maschinenbezogenen Kühl- bzw. Schmiermittelversorgungsanlagen für eine ausreichende, und zwar optimal dosierte Versorgung der Werkzeugschneide mit Schmiermittel sorgt. Die körperliche Ausgestaltung des Kühl- bzw. Schmiermittelspeichers erfolgt dann in Anpassung an die betreffenden, räumlichen Verhältnisse wie z.B. an die Formgebung des Werkzeugs bzw. der Werkzeug-Spannvorrichtung. Ferner wird durch die letztgenannte Ausführungsform der Erfindung eine hinsichtlich des ökologischen und wirtschaftlichen Gesichtspunkt besonders effektiv arbeitende Werkzeugaufnahme geschaffen

Selbstverständlich sind Abweichungen von den zuvor beschriebenen Ausführungsbeispielen im Rahmen des Patentansprüche möglich. So können andere Dosierventileinrichtungen unter Zuhilfenahme geeigneter hydraulischer Komponenten verwendet werden. Auch kann die Stellkraft für die Dosierventileinrichtung von thermischen Größen abgeleitet werden. Es ist auch möglich, die Dosierventileinrichtung extern beispielsweise über Infrarot-Signale anzusteuern. Ferner ist die Versorgung des Speicher-Innenvolumens auch zentral über die Maschinenspindel möglich.

Die Erfindung schafft somit eine Werkzeugaufnahme für kühl- bzw. schmiermittelversorgte drehende Werkzeuge, wie z.B. Bohr-oder Fräswerkzeuge, mit einem innenliegenden Kanalsystem zur Zuführung von Kühl- bzw. Schmiermittel an den Schaft des Werkzeugs. Um Werkzeugmaschinen besonders flexibel einsetzen zu können, wird die Werkzeugaufnahme erfindungsgemäß mit einem in die Werkzeugaufnahme integrierten, auffüllbaren und unter Druck setzbaren Kühl- bzw. Schmiermittelspeicher ausgestattet, der im Betrieb des Werkzeugs von einer Kühl- bzw. Schmiermittelquelle abkoppelbar ist und über eine Dosiereinrichtung das Werkzeug drehzahl- und/oder temperaturabhängig regulierbar mit Kühl- und Schmiermittel versorgt.

## Patentansprüche

1. Werkzeugaufnahme für kühl- bzw. schmiermittelversorgte rotierende Werkzeuge, wie z.B. Bohr- der Fräswerkzeuge, mit einem innenliegenden Kanalsystem (22; 122; 222; 322) zur Führung von Kühl- bzw. Schmiermittel an das Werkzeug und einem auffüllbaren und unter Druck setzbaren Kühl-bzw. Schmiermittelspeicher (24; 124; 224; 324), der in die Werkzeugaufnahme integriert bzw. mit der Werkzeugaufnahme einstückig ausgebildet ist, im Betrieb des Werkzeugs von einer externen Kühl- bzw. Schmiermittelquelle (260) abkoppelbar und über eine in Abhängigkeit von der Rotation der Werkzeugaufnahme betätigte Dosiereinrichtung (36 bis 40, M; 136 bis 140, M; 240, 258, M; 358, 370) an das Kanalsystem angeschlossen ist, dadurch gekennzeichnet, daß die Dosiereinrichtung (36 bis 40, M; 1136 bis 140, M; 240, 258, M; 358, 370) im Rotationsbetrieb des Werkzeugs drehzahlabhängig und/oder temperaturabhängig betätigbar ist.

2. Werkzeugaufnahme nach Anspruch 1, dadurch gekennzeichnet, daß die Dosiereinrichtung in die Werkzeugaufnahme (10; 110; 210; 310) integriert ist.

3. Werkzeugaufnahme nach Anspruch 1 oder 2, dadurch gekennzeichnet, daß die Dosiereinrichtung eine Fördereinrichtung (370) aufweist.

4. Werkzeugaufnahme nach Anspruch 2 oder 3, dadurch gekennzeichnet, daß die Fördereinrichtung (370) eine Einrichtung zur Erzeugung eines Luftstroms ist, mit dem Kühl- bzw. Schmiermittel in Form eines Luft-Kühl- bzw. Schmiermittel-Gemisches über das Kanalsystem der Werkzeugschneide zuführbar ist.

5. Werkzeugaufnahme nach Anspruch 4, dadurch gekennzeichnet, daß die Fördereinrichtung (370) eine Pumpe, beispielsweise eine Flügelzellenpumpe, aufweist, wobei ein Pumpengehäuse (382) in seinem Inneren ein Pumpenrad (384) aufnimmt, das relativ zum Pumpengehäuse drehbar ist und mit der Werkzeugaufnahme (310) drehfest gekoppelt ist.

6. Werkzeugaufnahme nach Anspruch 4 oder 5, dadurch gekennzeichnet, daß der Luftstrom über eine Mischkammer (368) führt, die an das Kanalsystem (322) angeschlossen ist.

7. Werkzeugaufnahme nach Anspruch 6, dadurch gekennzeichnet, daß die Mischkammer (368) eine Doppelringdüse mit einem inneren Ring (368b) und einem äußeren Ring (368a) aufnimmt, wobei der Luftstrom zwischen dem äußeren und inneren Ring das Kühl- bzw. Schmiermittel über Öffnungen im inneren Ring mit reißt.

8. Werkzeugaufnahme nach einem der vorhergehenden Ansprüche, dadurch gekennzeichnet, daß der Kühl- bzw. Schmiermittelspeicher von einem zylindrischen Volumen (26; 126; 226; 326) gebildet ist, das von einem kraft-, vorzugsweise federkraftbeaufschlagten Kolben (228; 328) begrenzt ist.

9. Werkzeugaufnahme nach Anspruch 8, dadurch gekennzeichnet, daß der Kolben (228) auf der dem Werkzeug abgewandten Seite einen Führungskragen (248) aufweist, in den die Speicherfeder (230) hineinragt.

10. Werkzeugaufnahme nach einem der Ansprüche 1 bis 9, dadurch gekennzeichnet, daß die Dosiereinrichtung eine Absperr- bzw.Dosierventileinrichtung (36, 38, 40; 136, 138, 140; 240, 258; 358) aufweist.

11. Werkzeugaufnahme nach Anspruch 10, dadurch gekennzeichnet, daß die Absperr- bzw. Dosierventileinrichtung so aufgebaut ist, daß ihr freier Durchtrittsquerschnitt und/oder ihre Drosselcharakteristik in Abhängigkeit vom Betriebszustand des Werkzeugs veränderbar ist.

12. Werkzeugaufnahme nach Anspruch 11, dadurch gekennzeichnet, daß die Absperr- bzw. Dosierventileinrichtung eine einstellbare Drossel (36; 136; 236) aufweist.

13. Werkzeugaufnahme nach Anspruch 10 oder 11, dadurch gekennzeichnet, daß die Absperr- bzw. Dosierventileinrichtung einen Ventilkörper (38; 138; 258) hat, dessen Stellung bezüglich einer Durchfluß-Steuerkante von der Kraft einer Rückstelleinrichtung, insbesondere einer Rückstellfeder (40; 140; 240) und einer entgegengerichteten Stellkraft (SF) abhängig ist, deren Größe mit dem Bearbeitungszustand des Werkzeugs variiert.

14. Werkzeugaufnahme nach Anspruch 13 für drehende Werkzeuge, dadurch gekennzeichnet, daß die Stellkraft (SF) fliehkraftabhängig ist.

15. Werkzeugaufnahme nach Anspruch 13 oder 14, dadurch gekennzeichnet, daß die Stellkraft temperaturabhängig ist.

16. Werkzeugaufnahme nach einem der Ansprüche 10 bis 13, dadurch gekennzeichnet, daß die Absperr- bzw. Dosierventileinrichtung in einer Begrenzungswand (246) des zylindrischen Volumens aufgenommen ist.

17. Werkzeugaufnahme nach einem der vorhergehenden Ansprüche, dadurch gekennzeichnet, daß sie rotationssymmentrisch aufgebaut ist.

18. Werkzeugaufnahme nach einem der vorhergehenden Ansprüche, dadurch gekennzeichnet, daß sie als Modul eines Werkzeugsystems ausgebildet ist und auf der der Spannstelle (14; 114; 214; 314) abgewandten Seite des Kühl- bzw. Schmiermittelspeichers (24; 124; 224; 324) einen Abschnitt (12; 112; 212; 312) zur Ankopplung an eine weitere Aufnahme aufweist.

19. Werkzeugaufnahme nach einem der vorhergehenden Ansprüche, dadurch gekennzeichnet, daß der Druck des Kühl- bzw. Schmiermittelspeichers (24; 124; 224; 324) einstellbar ist.

20. Werkzeugaufnahme nach einem der vorhergehenden Ansprüche, dadurch gekennzeichnet, daß der Kühl- bzw. Schmiermittelspeicher (24; 124; 224) über ein Rückschlagventil (32; 132; 232) an eine externe Kühl- bzw. Schmiermittel-Druckquelle (260) anschließbar ist.

21. Werkzeugaufnahme nach Anspruch 10, dadurch gekennzeichnet, daß die Absperr- bzw. Dosierventileinrichtung zwischen der Spannstelle des Werkzeugs und der Mischkammer (368) angeordnet ist.

22. Verfahren zur Kühlung bzw. Schmierung von einem in einer rotierenden Werkzeugaufnahme nach einem der Ansprüche 1 bis 21 eingespannten Werkzeug, dadurch gekennzeichnet, daß das Kühl- bzw. Schmiermittel im Rotationsbetrieb des Werkzeugs diesem über die drehzahlabhängig und/oder temperaturabhängig betätigbare Dosiereinrichtung (36 bis 40, Mi 136 bis 140, Mi 240, 258, Mi 358, 370) dosiert zugeführt wird.

23. Verfahren nach Anspruch 22, gekennzeichnet durch folgende Schritte:
Ansaugen von Luft aus der Umgebung der Werkzeugaufnahme mittels einer Fördereinrichtung (370),
Bilden eines aus der angesaugten Luft und dem Kühl-bzw. Schmiermittel bestehenden Gemisches in einer Mischkammer (368),
Zuführen des Gemisches zum Werkzeug über das innenliegende Kanalsystem, und gegebenenfalls zusätzliche Dosierung des Gemisches über die im Kanalsystem (322) eingebaute Dosierventileinrichtung (358).

24. Verfahren nach Anspruch 23, bei dem die Gemischbildung in einer in die Werkzeugaufnahme integrierten Mischkammer (368) erfolgt, dadurch gekennzeichnet, daß der von der Fördereinrichtung (370) angesaugte Luftstrom radial in die Mischkammer (368) geleitet wird und dieser das Kühl- bzw. Schmiermittel anschließend in Richtung zum Werkzeug axial mit sich führt.

25. Verfahren nach einem der Ansprüche 23 oder 24, dadurch gekennzeichnet, daß das Kühl- bzw. Schmiermittel lediglich einen kleinen Bruchteil der angesaugten Luftmenge ausmacht, wobei das Mengenverhältnis Kühl- bzw. Schmiermittel zu Luft bis auf einen Bereich von etwa 10ml/h Öl auf 3m³/h Luft absenkbar ist.

## Claims

1. A tool holder for rotating tools supplied with coolant or lubricant, such as boring or milling tools, with an internal duct system (22; 122; 222; 322) for passing coolant or lubricant to the tool and a preferably fillable and pressurizable coolant or lubricant reservoir (24; 124; 224; 324) which is integrated into the tool holder or constructed in one piece together with the tool holder, which during operation of the tool can be decoupled from an external coolant or lubricant source (260) and is connected to the duct system (22; 122; 222; 322) via a metering unit (36 to 40, M; 136 to 140, M; 240, 258, M; 358, 370) actuated in accordance with the rotation of the tool holder, characterized in that the metering unit (36 to 40, M; 136 to 140, M; 240, 258, M; 358, 370) may be operated during operation of the tool as a function of rotational velocity and/or temperature.

2. A tool holder according to claim 1, characterized in that the metering unit is integrated into the tool holder (10; 110; 210; 310).

3. A tool holder according to claim 1 or 2, characterized in that the metering unit is provided with a delivery unit (370).

4. A tool holder according to claim 2 or 3, characterized in that the delivery unit (370) is a unit for generating an air stream with which coolant or lubricant can be supplied in the form of a mixture of air and coolant or lubricant via the duct system to the tool lip.

5. A tool holder according to claim 4, characterized in that the delivery unit (370) is provided with a pump, for example a vane pump, the pump case (382) of which houses in its interior a pump impeller (384), which is rotatable relative to the pump case and is coupled with the tool holder (310) in such a way that it can rotate therewith.

6. A tool holder according to claim 4 or 5, characterized in that the air stream passes through a mixing chamber (368), which is connected to the duct system (322).

7. A tool holder according to claim 6, characterized in that the mixing chamber (368) houses a double-ring nozzle having an inner ring (368b) and an outer ring (368a), and the air stream between the outer and inner rings entrains the coolant or lubricant via holes in the inner ring.

8. A tool holder according to one of the preceding claims, characterized in that the coolant or lubricant reservoir is formed by a cylindrical volume (26; 126; 226; 326), which is bounded by a force-actuated, preferably spring-loaded piston (228; 328).

9. A tool holder according to claim 8, characterized in that the piston (228) is provided at the end facing away from the tool with a guide collar (248), into which the storage spring (230) extends.

10. A tool holder according to one of claims 1 to 9, characterized in that the metering unit is provided with a shutoff-valve unit or metering-valve unit (36, 38, 40; 136, 138, 140; 240, 258; 358).

11. A tool holder according to claim 10, characterized in that the shutoff-valve unit or metering-valve unit is constructed such that its free passage cross section and/or its throttling characteristic is variable as a function of the operating condition of the tool.

12. A tool holder according to claim 11, characterized in that the shutoff-valve unit or metering-valve unit is provided with an adjustable throttle (36; 136; 236).

13. A tool holder according to claim 10 or 11, characterized in that the shutoff-valve unit or metering-valve unit has a valve gate (38; 138; 258), the position of which relative to a flow control edge depends on the force of a restoring device, especially a restoring spring (40; 140; 240) and an opposing positioning force (SF), the magnitude of which varies with the machining condition of the tool.

14. A tool holder according to claim 13 for rotating tools, characterized in that the positioning force (SF) depends on centrifugal force.

15. A tool holder according to claim 13 or 14, characterized in that the positioning force depends on temperature.

16. A tool holder according to one of claims 10 to 13, characterized in that the shutoff-valve unit or metering-valve unit is housed in a boundary wall (246) of the cylindrical volume.

17. A tool holder according to one of the preceding claims, characterized in that it has rotationally symmetric structure.

18. A tool holder according to one of the preceding claims, characterized in that it is constructed as a module of a tool system and, at the end of the coolant or lubricant reservoir (24; 124; 224; 324) facing away from the chucking point (14; 114; 214; 314), it is provided with a section (12; 112; 212; 312) for coupling to a further holder.

19. A tool holder according to one of the preceding claims, characterized in that the pressure of the coolant or lubricant reservoir (24; 124; 224; 324) is adjustable.

20. A tool holder according to one of the preceding claims, characterized in that the coolant or lubricant reservoir (24; 124; 224) can be connected via a nonreturn valve (32; 132; 232) to an external coolant or lubricant pressure source (260).

21. A tool holder according to claim 10, characterized in that the shutoff-valve unit or metering-valve unit is disposed between the chucking point of the tool and the mixing chamber (368).

22. A process for cooling or lubricating a tool chucked in a tool holder according to one of claims 1 to 21, characterized in that the coolant or lubricant is supplied to the tool during operation thereof in a metered quantity via the metering unit (36 to 40, M; 136 to 140, M; 240, 258, M; 358, 370) which may be actuated as a function of rotational velocity and/or temperature.

23. A process according to claim 22, characterized by the following steps:
air is sucked in from the atmosphere around the tool holder by means of a delivery unit (370),
a mixture comprising the sucked-in air and the coolant or lubricant is formed in a mixing chamber (368),
the mixture is supplied to the tool via the internal duct system and, if necessary,
the mixture is additionally metered via the metering-valve unit (358) installed in the duct system (322).

24. A process according to claim 23, in which mixture formation takes place in a mixing chamber (368) integrated into the tool holder, characterized in that the air stream sucked in by the delivery unit (370) is passed radially into the mixing chamber (368) and this then carries the coolant or lubricant in axial direction toward the tool.

25. A process according to one of claims 23 or 24, characterized in that the coolant or lubricant constitutes only a small fraction of the sucked-in air flow, the quantitative proportion of coolant or lubricant relative to air being reducible to a range of approximately 10 ml/h of oil to 3 m³/h of air.

## Revendications

1. Porte-outil pour outils rotatifs alimentés en agent réfrigérant ou en lubrifiant, tels que par exemple outils de perçage ou de fraisage, comportant un système de canaux (22 ; 122 ; 222, 322) intérieur destiné à acheminer l'agent réfrigérant ou le lubrifiant à l'outil et comportant un accumulateur d'agent réfrigérant ou de lubrifiant (24 ; 124 ; 224 ; 324) qui peut être rempli et mis sous pression et qui est intégré au porte-outil ou réalisé d'un seul tenant avec ce dernier, qui peut être désaccouplé, pendant le fonctionnement de l'outil, d'une source externe (260) d'agent réfrigérant ou de lubrifiant et qui est raccordé au système de canaux par l'intermédiaire d'un dispositif de dosage (36 à 40, M ; 136 à 140, M ; 240 à 258, M ; 358, 370) actionné en fonction de la rotation du porte-outil, caractérisé en ce que le dispositif de dosage (36 à 40, M ; 136 à 140, M ; 240 à 258, M ; 358, 370) peut être actionné pendant le fonctionnement en rotation de l'outil, en fonction de la vitesse de rotation et/ou de la température.

2. Porte-outil selon la revendication 1, caractérisé en ce que le dispositif de dosage est intégré au porte-outil (10; 110; 210; 310).

3. Porte-outil selon la revendication 1 ou 2, caractérisé en ce que le dispositif de dosage comporte un dispositif de transport (370).

4. Porte-outil selon la revendication 2 ou 3, caractérisé en ce que le dispositif de transport (370) est un dispositif destiné à produire un courant d'air, au moyen duquel l'agent réfrigérant ou le lubrifiant, sous la forme d'un mélange air-agent réfrigérant ou lubrifiant, peut être acheminé vers la lame de l'outil, par le système de canaux.

5. Porte-outil selon la revendication 4, caractérisé en ce que le dispositif de transport (370) comporte une pompe, par exemple une pompe à cellules semi-rotative, un carter de pompe (342) logeant à l'intérieur une roue de pompe (384), qui peut tourner par rapport au carter de pompe et qui est accouplée solidairement en rotation avec le porte-outil (310).

6. Porte-outil selon la revendication 4 ou 5, caractérisé en ce que le courant d'air passe par une chambre de mélange (368) qui est raccordée au système de canaux (322).

7. Porte-outil selon la revendication 6, caractérisé en ce que la chambre de mélange (368) reçoit une buse à double anneau avec un anneau intérieur (368b) et un anneau extérieur (368a), le courant d'air emportant l'agent réfrigérant ou le lubrifiant, entre l'anneau extérieur et l'anneau intérieur, à travers des orifices pratiqués dans l'anneau intérieur.

8. Porte-outil selon l'une des revendications précédentes, caractérisé en ce que l'accumulateur d'agent réfrigérant ou de lubrifiant est formé par un volume cylindrique (26 ; 126 ; 226 ; 326) qui est limité par un piston (228, 328) soumis à l'action d'une force, de préférence à la force d'un ressort.

9. Porte-outil selon la revendication 8, caractérisé en ce que le piston (228) présente, sur le côté tourné à l'opposé de l'outil, une collerette de guidage (248) dans laquelle pénètre le ressort accumulateur (230).

10. Porte-outil selon l'une des revendications 1 à 9, caractérisé en ce que le dispositif de dosage comporte un dispositif à soupape d'arrêt ou à soupape de dosage (36, 38, 40 ; 136, 138, 140 ; 240, 258 ; 358).

11. Porte-outil selon la revendication 10, caractérisé en ce que le dispositif à soupape d'arrêt ou soupape de dosage est construit de manière que sa libre section de passage et/ou sa caractéristique d'étranglement peut varier en fonction de l'état de fonctionnement de l'outil.

12. Porte-outil selon la revendication 11, caractérisé en ce que le dispositif à soupape d'arrêt ou soupape de dosage comporte un organe d'étranglement (36 ; 136 ; 236) réglable.

13. Porte-outil selon la revendication 10 ou 11, caractérisé en ce que le dispositif à soupape d'arrêt ou soupape de dosage possède un corps de soupape (38 ; 138 ; 258) dont la position par rapport à un bord de commande de débit dépend de la force d'un dispositif de rappel, notamment d'un ressort de rappel (40; 140 ; 240) et d'une force de réglage (SF) dirigée en sens inverse, dont la grandeur varie avec l'état d'usinage de l'outil.

14. Porte-outil selon la revendication 13 pour outils rotatifs, caractérisé en ce que la force de réglage (SF) dépend de la force centrifuge.

15. Porte-outil selon la revendication 13 ou 14, caractérisé en ce que la force de réglage dépend de la température.

16. Porte-outil selon l'une des revendications 10 à 13, caractérisé en ce que le dispositif à soupape d'arrêt ou soupape de dosage est logé dans une paroi de délimitation (246) du volume cylindrique.

17. Porte-outil selon l'une des revendications précédentes, caractérisé en ce qu'il est construit suivant une symétrie de révolution.

18. Porte-outil selon l'une des revendications précédentes, caractérisé en ce qu'il est réalisé en tant que module d'un système d'outils et présente, sur le côté de l'accumulateur d'agent réfrigérant ou de lubrifiant (24 ; 124 ; 224 ; 324), tourné à l'opposé du point de serrage (14 ; 114 ; 214 ; 314), une partie (12 ; 112 ; 212 ; 312) destinée à être accouplée à un autre porte-outil.

19. Porte-outil selon l'une des revendications précédentes, caractérisé en ce que la pression de l'accumulateur d'agent réfrigérant ou de lubrifiant (24 ; 124 ; 224 . 324) est réglable.

20. Porte-outil selon l'une des revendications précédentes, caractérisé en ce que l'accumulateur d'agent réfrigérant ou de lubrifiant (24 ; 124 . 224) peut être raccordé, par un clapet de non-retour (32 ; 132 ; 232), à une source de pression (260) externe pour l'agent réfrigérant ou le lubrifiant.

21. Porte-outil selon la revendication 10, caractérisé en ce que le dispositif à soupape d'arrêt ou soupape de dosage est disposé entre le point de serrage de l'outil et la chambre de mélange (368).

22. Procédé de refroidissement ou de lubrification d'un outil bridé dans un porte-outil rotatif selon l'une des revendications 1 à 21, caractérisé en ce que l'agent réfrigérant ou le lubrifiant est acheminé de manière dosée vers l'outil, pendant le fonctionnement en rotation de ce dernier, par l'intermédiaire du dispositif de dosage (36 à 40, M ; 136 à 140, M ; 240, 258, M ; 358, 370), qui peut être actionné en fonction de la vitesse de rotation et/ou de la température.

23. Procédé selon la revendication 22, caractérisé par les étapes suivantes :
- aspiration de l'air provenant du milieu ambiant du porte-outil au moyen d'un dispositif de transport (370),
- formation d'un mélange constitué de l'air aspiré et de l'agent réfrigérant ou du lubrifiant dans une chambre de mélange (368),
- acheminement du mélange vers l'outil par le système de canaux intérieur et éventuellement,
- dosage supplémentaire du mélange par le dispositif à soupape de dosage (358) incorporé au système de canaux (322).

24. Procédé selon la revendication 23, dans lequel la formation du mélange s'effectue dans une chambre de mélange (368), intégrée au porte-outil, caractérisé en ce que le courant d'air, aspiré par le dispositif de transport (370), est guidé radialement dans la chambre de mélange (368) et ce courant d'air emporte ensuite axialement l'agent réfrigérant ou le lubrifiant, en direction de l'outil.

25. Procédé selon l'une des revendications 23 ou 24, caractérisé en ce que l'agent réfrigérant ou le lubrifiant ne constitue qu'une petite fraction de la quantité d'air aspirée, le rapport en quantité entre l'agent réfrigérant ou le lubrifiant et l'air pouvant être abaissé jusqu'à un ordre de grandeur d'environ 10 millilitres/heure d'huile pour 3 m³/heure d'air.
